# EUROPEAN PATENT SPECIFICATION

(11) **EP 3 898 276 B1**
(45) Date of publication and mention of the grant of the patent: **01.11.2023**
(21) Application number: 19849043.5
(22) Date of filing: 19.12.2019
(51) Int. Cl.: B60C 9/00

(54) **TYRE FOR VEHICLE WHEELS**
REIFEN FÜR FAHRZEUGRÄDER
PNEUMATIQUE DESTINÉ À DES ROUES DE VÉHICULE

(30) Priority: 20.12.2018 IT 201800020428
(43) Date of publication of application: 27.10.2021
(73) Proprietor: Pirelli Tyre S.p.A., 20126 Milano (IT)
(72) Inventor: BRIVIO, Paolo, 20126 Milano (IT); PARENTE, Rocco, 20126 Milano (IT); RAMPANA, Barbara, 20126 Milano (IT); CARACINO, Paola, 20126 Milano (IT)
(74) Representative: Porta & Consulenti Associati S.p.A.
(86) International application number: PCT/IB2019/061075
(87) International publication number: WO 2020/128934

(56) References cited:
- EP-A1- 0 329 590
- EP-A1- 2 065 222
- EP-A1- 2 781 367
- WO-A1-2014/126543
- WO-A1-2015/019214
- WO-A1-2017/068394
- WO-A1-2019/115040
- DE-A1-102014 205 700
- US-A1- 2010 065 178
- US-A1- 2012 267 029

## Description

The present invention refers to a tyre for vehicle wheels.

### PRIOR ART

Tyres for vehicle wheels are for example described in documents WO2011012944 and US20120267029 to the Applicant and in documents EP0535969, EP1745945, EP2810791, US4155394 and US20140360648. Other relevant prior art is known from WO 2014/126543 A1, WO 2017/068394 A1, WO 2015/019214 A1, EP 2 065 222 A1, US 2010/065178 A1, EP 0 329 590 A1, EP 2 781 367 A1, DE 10 2014 205700 A1 and WO 2019/115040 A1.

### SUMMARY OF THE INVENTION

In the present description and in the following claims, when reference is made to certain values of certain angles, they are meant as absolute values, i.e. both positive values and negative values with respect to a reference direction or plane, unless specified otherwise.

Furthermore, when reference is made to any range of values comprised between a minimum value and a maximum value, the aforementioned minimum and maximum values are deemed to be included in the aforementioned range, unless the otherwise is expressly provided for.

For the purposes of the present invention the following definitions apply.

The term "tyre for motorcycles" is meant to indicate a tyre having a high curvature ratio (typically more than 0.20) and capable of reaching high camber angles during cornering.

The term "curvature ratio" is meant to indicate the ratio between the distance comprised between the radially highest point of the tread band and the maximum radial section width (also called "maximum cord") of the tyre, and the same maximum width of the tyre, in a cross section thereof. Tyres for rear wheels of high-performance motorcycles have a curvature ratio substantially equal to or greater than about 0.32.

The term "equatorial plane" of the tyre is meant to indicate a plane perpendicular to the rotation axis of the tyre and that divides the tyre into two symmetrically equal parts.

The term "camber angle" is meant to indicate the angle between the equatorial plane of the tyre mounted on the wheel of the motorcycle and a plane perpendicular to the road surface.

The terms "radial" and "axial" and the expressions "radially inner/outer" and "axially inner/outer" are used with reference respectively to a direction substantially parallel and to a direction substantially perpendicular to the equatorial plane of the tyre, i.e. respectively to a direction substantially perpendicular and to a direction substantially parallel to the rotation axis of the tyre.

The terms "circumferential" and "circumferentially" are used with reference to the direction of annular extension of the tyre, i.e. to the rolling direction of the tyre, which corresponds to a direction lying on a plane coinciding with or substantially parallel to the equatorial plane of the tyre.

The term "substantially axial direction" is meant to indicate a direction inclined, with respect to the equatorial plane of the tyre, by an angle comprised between about 70° and about 90°.

The term "substantially circumferential direction" is meant to indicate a direction oriented, with respect to the equatorial plane of the tyre, at an angle comprised between about 0° and about 30°.

The term "elastomeric material" or "elastomer" here is meant to indicate a material comprising a vulcanizable natural or synthetic polymer and a reinforcing filler, which, at room temperature, after having been subjected to vulcanization, is able to undergo deformations caused by a force and is capable of quickly and energetically recovering the substantially original shape and size after the elimination of the deforming force (according to the definitions of standard ASTM D1566-11 Standard Terminology Relating To Rubber).

The expression "reinforcing cord", or more simply "cord" is meant to indicate an element consisting of one or more "yarns", where the term "yarn" is meant to indicate an elongated element possibly coated with, or incorporated in, a matrix of elastomeric material. A reinforcing cord can have one or more "ends", where the term "end", when referring to a reinforcing cord, is meant to indicate a single yarn.

The term "textile yarn" is meant to indicate the aggregation of a plurality of textile filaments. Each filament can also be called "fiber".

The textile yarns can have one or more "ends", where the term "end", when referring to a textile yarn, is meant to indicate a bundle of filaments made from the same material and aggregated so as to be twisted together (i.e. a yarn twisted on itself). Preferably, a textile yarn provides for a single end or at least two ends twisted together.

The expression "hybrid yarn" is meant to indicate a multi-filament yarn obtained from a first yarn and a second yarn, each of which comprising a plurality of filaments, in which the filaments of the first yarn are "mixed" with the filaments of the second yarn, in which the filaments of the first yarn are made from a single material, in which the filaments of the second yarn are made from a single material and in which the material of the filaments of the first yarn is different from the material of the filaments of the second yarn. The term "mixed" is meant to indicate that the single filaments of the first yarn and the single filaments of the second yarn are arranged with respect to one another according to a substantially random scheme.

The expression "hybrid reinforcing cord" is meant to indicate a reinforcing cord made from a first yarn and a second yarn twisted together, in which the first yarn is made from a different material from the material that the second yarn is made from.

The term "radial carcass structure" is meant to indicate a carcass structure comprising a plurality of reinforcing cords each of which is oriented along a substantially axial direction. Such reinforcing cords can be incorporated in a single carcass ply or in many carcass plies (preferably two) radially juxtaposed over one another.

The term "crossed belt structure" is meant to indicate a belt structure comprising a first belt layer including reinforcing cords substantially parallel to one another and inclined with respect to the equatorial plane of the tyre by a predetermined angle and at least one second belt layer arranged in radially outer position with respect to the first belt layer and including reinforcing cords substantially parallel to one another but oriented, with respect to the equatorial plane of the tyre, with opposite inclination to that of the reinforcing cords of the first layer.

The term "zero degrees belt structure" is meant to indicate a belt structure comprising at least one reinforcing cord wound on the carcass structure according to a substantially circumferential winding direction.

The term "linear density" or "count" of a cord or of a yarn is meant to indicate the weight of the cord or of the yarn per unit length. The count is measurable in dtex (grams per 10 km length).

The expression "tensile strength" of a reinforcing cord is meant to indicate the load at which breaking occurs, evaluated with the aforementioned method BISFA E6

The expression "tangent modulus" is meant to indicate the ratio between load and elongation measured at any point of a load-elongation curve according to the standard BISFA E6. Such a curve is drawn by calculating the first derivative of the load-elongation function that defines the aforementioned curve, normalized at the linear density expressed in Tex. The modulus is therefore expressed in cN/Tex.

The expression "initial tangent modulus" is meant to indicate the tangent modulus calculated at the origin point of the load-elongation curve, i.e. for an elongation equal to zero.

The term "high modulus" is meant to indicate an initial tangent modulus equal to or greater than 3000 cN/Tex. The term "low modulus" is meant to indicate an initial tangent modulus lower than 3000 cN/Tex.

For the purposes of the present invention, for the measurement of the linear density and of the initial tangent modulus reference is made to flat wires, without twists applied in the testing step, according to the tests regulated by BISFA (Bureau International pour la Standardisation des Fibres Artificielles). In particular:
- for aramidic fibers (AR), reference is made to BISFA - Methods for testing yarns of para-aramidic fibers 2002 edition:
   - Determining linear density - Chapter 6;
   - Determining tensile properties - Chapter 7 - Testing Procedure - Paragraph 7.5 - with initial pretensioning procedure;
   - Tractions carried out with Zwick - Roell Z010 dynamometer;
- for Polyester (PET), reference is made to BISFA - Methods for testing polyester yarns- 2004 edition:
   - Determining linear density - Chapter 6 - Procedure A;
   - Determining tensile properties - Chapter 7 - Procedure A;
   - Preparing laboratory samples: Preparing samples in relaxation - paragraph 7.4.1.1 => preparing samples on collapsible cone;
   - Preparing laboratory samples and carrying out the test: Manual test - paragraph 7.5.2.1 => c);
   - Start procedure => e) pretension at start of procedure;
   - Tractions carried out with Zwick - Roell Z010 dynamometer

The expression "elongation at break" of a reinforcing cord is meant to indicate the percentage elongation at which breaking occurs, evaluated with method BISFA E6 (The International Bureau For The Standardization Of Man-Made Fibres, Internationally Agreed Methods For Testing Steel Tyre Cords, 1995 edition).

The term "footprint" of the tyre is meant to indicate the portion of tyre in contact with the road surface when the tyre is mounted on a wheel rim and a predetermined vertical load is exerted on the tyre.

Both tyres for automobiles and tyres for motorcycles need to adhere to the ground, so as to be able to effectively transfer to the ground the drive torque to which they are subjected and, thus, achieve a thrust and an effective braking force. Such tyres must also be light and provide an adequate response to the stresses to which the tyre is subjected in bends.

Tyres for automobiles typically comprise a radial carcass structure extending between opposite bead structures, a crossed belt structure arranged in radially outer position with respect to the carcass structure, possibly a zero degrees reinforcing layer arranged in radially outer position with respect to the crossed belt structure, and a tread band arranged in radially outer position with respect to the belt structure or to the zero degrees reinforcing layer when present.

The carcass structure is intended to give the tyre the desired features of integrity and structural strength, whereas the belt structure, as well as contributing to obtaining the aforementioned features of integrity and structural strength, is intended to transfer to the carcass structure the lateral and longitudinal stresses to which the tyre is subjected during travel after contact with the road surface, so as to give the tyre the desired features of performance (i.e. grip, driving stability, controllability, directionality, road holding) and comfort. The zero degrees reinforcing layer, when present, on the other hand, is intended to limit the radial deformation of the belt structure.

Tyres for motorcycle wheels are typically characterized by a high transversal curvature, so as to offer an adequate contact surface with the road surface when the motorcycle is inclined to go round a bend.

Such tyres, as well as supporting the weight of the motorcycle in all travel conditions (thus including the weight of the driver and of a possible load), must ensure riding stability, controllability, directionality, road holding, in all conditions, in other words during travel along a straight line, during cornering, during entry into a corner, during exit from a corner and during braking.

The controllability of the motorcycle perceived by the rider, and therefore the performance that he/she is able to obtain, depends on the grip of the motorcycle in all travel conditions and is thus correlated to the footprint. The stability of the footprint, in other words its ability to stay as constant as possible, is given by the rigidity of the tyre. The more rigid the tyre, the less the tyre deforms, the quicker the tyre recovers deformations during stresses and, therefore, the more the footprint is stable and the behavior of the tyre is predictable.

For the reasons outlined above, both in tyres for automobiles and in tyres for motorcycle wheels, making the carcass structure is of substantial importance. Indeed, it is the carcass structure that must structurally support most of the stresses that are transmitted by the road surface to the wheel and vice-versa, and therefore the response of the carcass structure to such stresses conditions the overall behavior of the tyre.

A plurality of reinforcing cords are thus usually provided in the carcass structure, which have the function of giving the carcass structure the desired properties of structural strength and rigidity.

Typically, reinforcing cords that are made from textile yarns with low modulus are used to favor riding comfort, possibly at the expense of absolute performance (in terms of directionality and controllability), and to favor durability, in terms of resistance to fatigue, of the tyre.

On the other hand, reinforcing cords made from textile yarns with high modulus are used to favor absolute performance in terms of riding stability, controllability, directionality, road holding with sudden changes of direction and/or speed, possibly at the expense of riding comfort and durability in terms of resistance to fatigue of the tyre.

Moreover, hybrid reinforcing cords are used in order to try to obtain a compromise between what can be obtained by reinforcing cords made from textile yarns with low modulus and reinforcing cords made from textile yarns with high modulus. Such hybrid reinforcing cords are made from a first textile yarn and a second textile yarn twisted together, in which the first textile yarn has low modulus and the second textile yarn has a high modulus.

The experiences of the Applicant have shown that tyres with carcass structures made this way are not always satisfactory.

As an example of the above, a solution used by the Applicant provides for the use of reinforcing cords made from textile yarns with high modulus, specifically made from Aramid, in tyres for high-performance motorcycles, in other words intended to be used on motorcycles capable of reaching speeds of over 270 km/h or having engine capacity equal to or greater than 600cm³ and power equal to or greater than 80 kW. Such motorcycles are for example those that belong to the categories typically identified as hypersport, supersport, and racing.

Aramidic fibers have a high modulus and thus a high rigidity that makes it possible to keep the design profile and thus the best footprint of the tyre during use thereof.

Indeed, the high rigidity of aramidic fibers makes it possible to counteract the tendency of the carcass structure to deform when subjected to the thrusts generated by the contact of the tyre with the asphalt.

The tyre in which the carcass structure comprises reinforcing cords made of Aramid offers the driver a linear and predictable response, making the motorcycle very controllable, so as to allow high performance to be maintained over a short distance, typical of sports use.

The Applicant has however found that such tyres have some limits that jeopardize the use thereof in the case of medium-long journeys of the tyre.

In particular, the experiences of the Applicant show that the carcass structure having reinforcing cords made from Aramid has poor resistance to fatigue when subjected to repeated loads, particularly in temperature conditions of 50°C - 100°C like those encountered in the use of the tyre during a race or in any case during intensive use.

The Applicant has found that the use of a tyre with carcass structure having reinforcing cords made from Aramid that has absorbed stresses corresponding to use over a distance of 50/100 Km (thus between 25000 and 50000 complete rolling cycles) can become critical due to risks of instantaneous breaking of the carcass and possible bursting of the tyre.

On the other hand, a same tyre with carcass structure having reinforcing cords made from textile yarns with low modulus, like for example PET, Nylon or Rayon, shows an excellent resistance to fatigue. However, such a tyre is not able to counteract the tendency of the carcass to deform when subjected to the stresses generated by the contact of the tyre with the asphalt, especially during a race or in any case during intensive use.

The experiences of the Applicant therefore show that on the one hand the tyres made with carcass structure comprising textile yarns with low modulus, whilst being suitable for recreational use, do not achieve the rigidity values necessary for sports performance. On the other hand, racing tyres made with carcass structure comprising reinforcing cords made from textile yarns with high modulus, whilst possessing excellent tensile features, may not reach the standards of durability and reliability required due to their limited resistance to fatigue.

In an attempt to provide a tyre for motorcycles of the high performance type capable of maintaining the design profile during a race or intensive use, thus allowing excellent features of stability and drivability, and which, nevertheless, is capable of withstanding fatigue stresses during a race or intensive use, the Applicant has made a carcass structure comprising hybrid reinforcing cords, so as to combine the effects of a reinforcing cord made from aramidic material with the effects of a reinforcing cord made from PET, Nylon or Rayon.

For this purpose, the Applicant has used hybrid reinforcing cords having a first end made from textile yarn with high modulus, in particular Aramid, and a second end made from textile yarn with low modulus, in particular PET, Nylon or Rayon, in which the first end and the second end are twisted together.

The experiences of the Applicant have shown that a tyre with a carcass structure thus made has behavior that, at low loads, behaves comparably to a tyre having a carcass structure made from reinforcing cords with low modulus, whereas at high loads it behaves comparably to a tyre having a carcass structure made from reinforcing cords with high modulus.

In terms of driving the motorcycle equipped with such a tyre, this has translated into a substantially bimodal behavior, which, as a function of the stress to which the tyre is subjected, returns to the driver dissimilar and not always predictable driving feelings, not allowing the driver to have the necessary driving feeling in every driving condition of the motorcycle.

From the above example, the Applicant has perceived that in the search for the desired performance of a tyre for vehicle wheels (be they motorcycles or automobiles) it may be that excellent stability and drivability have to be given up in order to obtain better riding comfort or more durability of the tyre, or excellent driving comfort or long durability of the tyre may have to be given up to obtain excellent stability and drivability.

The Applicant has surprisingly found that, by making a carcass structure comprising hybrid reinforcing cords having a first end made from a hybrid yarn comprising filaments having a first modulus mixed with filaments having a second modulus different from the first modulus and a second end twisted together with the first end and made from filaments having a third modulus, it is possible, as a function of the choice of the first, second and third modulus, to calibrate the behavior of the tyre in terms of driving comfort, durability of the tyre, stability and drivability without giving up the necessary driving feeling in every driving condition of the vehicle.

For example, by selecting the first modulus so that it is a high modulus, the second modulus so that it is a low modulus and the third modulus so that it is a high modulus, it is possible to make a tyre for motorcycles having good fatigue behavior during a race or intensive use and, simultaneously, capable of counteracting the tendency of the carcass structure to deform when subjected to the thrusts generated by the contact of the tyre with the asphalt, thus offering the driver excellent stability and drivability of the motorcycle.

The Applicant deems that, in this case, the filaments with high modulus provide the desired rigidity, whereas those with low modulus provide the desired fatigue resistance. The use of both of the aforementioned types of filaments in a single hybrid yarn and the twisting of such a hybrid yarn with a textile yarn comprising only filaments with high modulus makes it possible to obtain a rigidity and a driving feeling comparable to those of current reinforcing cords made from Aramid used in tyres for motorcycles for short races and a resistance to fatigue stresses that allows the use of the tyre even in long races and on the road.

The present invention therefore relates, in a first aspect thereof, to a reinforcing cord for a tyre for vehicle wheels according to claim 1.

In a second aspect thereof, the invention relates to a tyre for vehicle wheels according to claim 3.

Preferably, the carcass structure of the tyre comprises at least one carcass ply.

Preferably, the carcass ply comprises a plurality of reinforcing cords comprising a first end and a second end twisted together.

Preferably, in the first end it is a hybrid yarn comprising a plurality of first filaments mixed with a plurality of second filaments.

Preferably, the filaments of the plurality of first filaments are made from a single material having a first modulus and the filaments of the plurality of second filaments are made from a single material having a second modulus different from the first modulus.

Preferably, the second end is a textile yarn comprising a plurality of third filaments made from at least one material having a third modulus.

Preferably, the reinforcing cord comprises a first end and a second end twisted together.

Preferably, in the first end it is a hybrid yarn comprising a plurality of first filaments mixed with a plurality of second filaments.

Preferably, the filaments of the plurality of first filaments are made from a single material having a first modulus and the filaments of the plurality of second filaments are made from a single material having a second modulus different from the first modulus.

Preferably, the second end is a textile yarn comprising a plurality of third filaments made from at least one material having a third modulus.

In at least one of the aforementioned aspects, the present invention can have at least one of the preferred features described hereinafter.

Preferably, said second modulus is smaller than said first modulus.

Preferably, said third modulus is greater than or equal to said first modulus.

Preferably, said first modulus and said third modulus are greater than said second modulus.

Preferably, the filaments of the plurality of first filaments are made from a single material having a high modulus.

Preferably, the filaments of the plurality of second filaments are made from a single material having a low modulus.

In preferred embodiments, the filaments of the plurality of first filaments are made from a single material having a high modulus, in which the filaments of the plurality of second filaments are made from a single material having a low modulus and in which the plurality of third filaments are made from at least one material having a high modulus.

In preferred embodiments, the filaments of the plurality of first filaments are made from aramidic material.

Preferably, the filaments of the plurality of second filaments are made from a material selected from the group comprising: polyethylene terephthalate (PET), polyethylene napthalate (PEN), Nylon, Rayon.

More preferably, the filaments of the plurality of second filaments (25) are made from polyethylene terephthalate (PET).

Preferably, the filaments of the plurality of third filaments are made from aramidic material.

Preferably, the filaments of the plurality of first filaments are made from the same material as the filaments of the plurality of third filaments.

Preferably, the filaments of the plurality of first filaments are mixed with the filaments of the plurality of second filaments in a proportion of 50% by weight.

Preferably, the hybrid yarn is obtained from a first yarn comprising said plurality of first filaments and from a second yarn comprising said plurality of second filaments.

Preferably, the count of the textile yarn of the second end is equal to or greater than the count of the first yarn.

Preferably, the count of the first yarn is greater than or equal to about 840 dtex.

Preferably, the count of the first yarn is less than or equal to about 2200 dtex.

In preferred embodiments, the count of the first yarn is comprised between about 840 dtex and about 2200 dtex, preferably between about 840 dtex and about 1670 dtex, for example equal to about 1100 dtex.

Preferably, the count of the second yarn is greater than or equal to about 840 dtex.

Preferably, the count of the second yarn is less than or equal to about 2200 dtex.

In preferred embodiments, the count of the second yarn is comprised between about 840 dtex and about 2200 dtex, preferably between about 840 dtex and about 1670 dtex, for example equal to about 1100 dtex.

In a preferred embodiment of the invention, the count both of the first yarn and of the second yarn is equal to about 1100 dtex.

Preferably, the count of the textile yarn of the second end is greater than or equal to about 1100 dtex.

Preferably, the count of the textile yarn of the second end is less than or equal to about 2200 dtex.

In preferred embodiments, the count of the textile yarn of the second end is comprised between about 1100 dtex and about 2200 dtex, preferably between about 1100 dtex and about 1670 dtex, for example equal to about 1670 dtex.

Preferably, the number of reinforcing cords of the carcass ply per decimeter is greater than or equal to about 80, more preferably greater than or equal to about 90, even more preferably greater than or equal to about 97.

Preferably, the number of reinforcing cords of the carcass ply per decimeter is less than or equal to about 120, more preferably less than or equal to 110.

In preferred embodiments, the number of reinforcing cords of the carcass ply per decimeter is comprised between about 80 and about 120, preferably between about 97 and about 110.

Preferably, the first end and the second end are twisted on themselves with a predetermined number of twists per meter, more preferably with an equal and predetermined number of twists per meter.

Preferably, when said reinforcing cord is subjected to a load equal to about 265 N said elongation is equal to about 5%. Such a reinforcing cord in such a case has an elongation comparable to that of reinforcing cords made from Aramid of equal count and equal number of twists per decimeter but a lower tangent modulus than them, thus being more yielding.

In preferred embodiments, said at least one reinforcing cord has, at high loads (loads over about 130 N), an elongation comparable to that of the aforementioned reinforcing cords made from Aramid.

Preferably, when said at least one reinforcing cord is subjected to a load equal to about 20 N said elongation is less than about 1%.

Preferably, when said at least one reinforcing cord is subjected to a load equal to about 100 N said elongation is less than about 3%.

Preferably, said at least one reinforcing cord has a tensile strength greater than, or equal to, about 350 N, more preferably greater than or equal to about 380 N, for example equal to about 410 N.

Preferably, said carcass structure is a radial carcass structure.

Preferably, the plurality of reinforcing cords is incorporated in two carcass plies radially juxtaposed over one another.

Preferably, the carcass structure comprising opposite end edges turned around respective annular anchoring structures to define, on opposite sides with respect to an equatorial plane of the tyre, respective bead structures; the plurality of reinforcing cords being incorporated in said two carcass plies.

Preferably, the belt structure comprises at least one reinforcing cord wound on the carcass structure according to a substantially circumferential winding direction.

### BRIEF DESCRIPTION OF THE FIGURES

Further features and advantages of the tyre of the present invention will become clearer from the following detailed description of some preferred embodiments thereof, made with reference to the attached drawings only as an example and not for limiting purposes. In such drawings:
- figure 1 is a schematic partial half cross section view of a portion of a tyre according to an embodiment of the present invention;
- figure 2 is a schematic side view of a segment of a first embodiment of a reinforcing cord used in the tyre of figure 1;
- figure 3 is an enlarged schematic view of a cross section of an end of the reinforcing cord of figure 2;
- figure 4 is an enlarged schematic view of two yarns able to be used to make the end of the reinforcing cord of figure 3; and
- figure 5 is an enlarged schematic view of a cross section of the reinforcing cord of figure 2.

### DETAILED DESCRIPTION OF EMBODIMENTS OF THE INVENTION

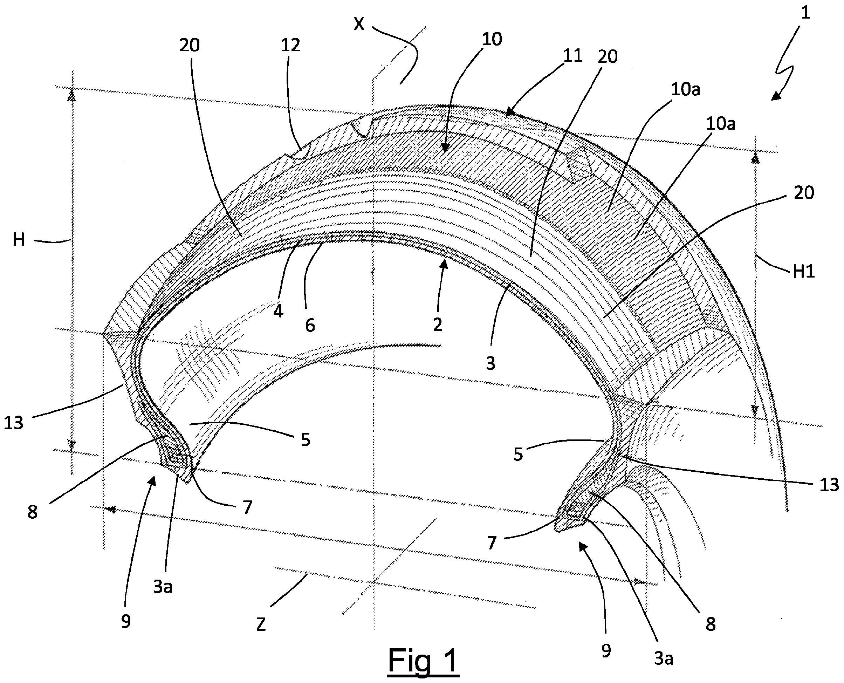

In figure 1, reference numeral 1 wholly indicates a tyre for vehicle wheels according to the present invention. In the specific example of figure 1, the tyre 1 is a tyre specifically intended to be used on the wheel of a high-performance motorcycle. However, the following can be applied, except when explicitly indicated otherwise, to a tyre for wheels of other types of vehicles.

An equatorial plane X and a rotation axis Z perpendicular to the equatorial plane X are defined in the tyre 1. An axial (or transversal, or lateral) direction, substantially parallel to the rotation axis Z and a circumferential (or longitudinal) direction, substantially parallel to the equatorial plane X and corresponding to the rolling direction of the tyre 1 are also defined.

The tyre 1 comprises a carcass structure 2 in turn comprising at least one carcass ply 3 comprising a plurality of reinforcing cords according to the invention arranged parallel to one another.

Preferably, the carcass structure 2 comprises two carcass plies 3 juxtaposed over one another.

The carcass structure 2 has, in an axial section thereof, a substantially toroidal configuration.

The carcass structure 2 comprises a crown portion 4 symmetrically arranged with respect to the equatorial plane X, and opposite lateral portions 5 arranged on axially opposite sides to the crown portion 4.

The illustrated carcass structure 2 comprises a carcass ply 3 extending axially from a lateral portion 5 of the carcass structure 2 to the opposite lateral portion 5.

The carcass ply 3 is preferably coated, on the radially inner wall, by a sealing layer 6, so-called "liner", essentially consisting of a layer of airtight elastomeric material, adapted for ensuring the hermetic seal of the tyre 1 itself once inflated.

The carcass ply 3 is engaged, at the respective axially opposite lateral edges 3a, with respective annular reinforcing structures 7, typically called "bead cores".

Each lateral edge 3a of the carcass ply 3 is turned around a respective bead core 7.

A tapered elastomeric filler 8 that occupies the space defined between the carcass ply 3 and the respective turned lateral edge 3a is applied on the outer perimeter edge of the bead cores 7.

In an alternative embodiment that is not illustrated, the carcass ply 3 has its opposite lateral edges 3a associated without turning with particular annular reinforcing structures provided with two metallic annular inserts. In this case, a filler made from elastomeric material can be arranged in axially outer position with respect to the first annular insert. The second annular insert, on the other hand, is arranged in axially outer position with respect to the end of the carcass ply 3. Finally, in axially outer position with respect to said second annular insert, and not necessarily in contact with it, there can be a further filler that finishes off the annular reinforcing structure.

The area of the tyre comprising the bead core 7 and the elastomeric filler 8 forms the so-called "bead", globally indicated in figure 1 with 9, intended for anchoring through elastically forced fitting of the tyre on a corresponding mounting rim, not illustrated.

In radially outer position with respect to the aforementioned carcass structure 2, there is a belt structure 10. The belt structure 10 is arranged at at least one portion of the crown portion 4.

The belt structure 10 of the tyre 1 is of the zero degrees type. It is formed by winding onto the crown portion 4 of the carcass structure 2 one or more layers comprising a single reinforcing cord 10a, or a band-like element reinforced with rubber fabric comprising a plurality of reinforcing cords 10a arranged adjacent in the axial direction, to form a plurality of turns substantially oriented according to the circumferential direction of the tyre 1 (preferably with an angle comprised between 0° and 5° with respect to the equatorial plane X). In the case in which a reinforced band-like element is used, it can comprise up to seven reinforcing cords 10a, more preferably two or three or four reinforcing cords 10a.

Preferably, the winding defined by the turns extends axially over the entire crown portion 4, with a winding pitch that can be constant or variable in the axial direction.

Preferably, the reinforcing cords 10a of the belt structure 10 are made from metallic material. Even more preferably, the reinforcing cord 10a is made through wires of steel having high carbon content, in other words wires of steel with a carbon content over 0.60% - 0.90%.

The belt structure 10 can also comprise one or more support layers made from elastomeric material (not illustrated) arranged between the layer of reinforcing cords 10a and the carcass ply 3 and on which the turns are wound. Such a layer/layers can extend over a surface having an axial extension substantially corresponding to the surface on which the turns extend.

In radially outer position with respect to the belt structure 10 there is a tread band 11, by means of which the contact of the tyre 1 with the road surface takes place.

The tread band 11 can have a tread pattern defined by a plurality of grooves 12 variously spread over the different areas of the tyre.

The tyre 1 can also comprise, at each of the opposite lateral portions 5 of the carcass structure 2, a respective sidewall 13 that extends from the tread band 11 to the bead 9 of the tyre 1.

The tyre 1 represented in figure 1 is, as stated, for wheels of high-performance motorcycles and is distinguished by a high transversal curvature (and therefore by a high curvature ratio) and, preferably, recessed sidewalls.

Preferably, the curvature ratio is greater than 0.200, more preferably greater than 0.250. Such a curvature ratio is typically less than 0.800. Preferably, the curvature ratio is comprised respectively between about 0.200 and about 0.500 for a rear tyre and between about 0.350 and about 0.600 for a front tyre.

With reference to figure 1, the term tyre with low or recessed sidewalls is meant to indicate a tyre in which the ratio between the distance H-H1 and the height H, measured on the equatorial plane X between the radially highest point of the tread band 11 and the fitting diameter, substantially defined by the reference line L passing through the beads 9 of the tyre, is preferably less than 0.65, more preferably less than 0.6, for example equal to 0.55.

The carcass ply 3 of the carcass structure 2 is preferably made from elastomeric material and comprises a plurality of reinforcing cords 20 that are preferably arranged substantially parallel to one another and oriented along a substantially axial direction. More preferably, each reinforcing cord 20 belongs to a respective radial plane of the tyre 1.

The carcass structure 2 is therefore a radial carcass structure.

In the embodiment illustrated in figure 1 all of the reinforcing cords 20 belong to a single carcass ply 3.

In an alternative embodiment that is not illustrated, the carcass structure 2 comprises at least two carcass plies 3 radially juxtaposed over one another and the reinforcing cords 20 are always arranged substantially parallel to one another and oriented along a substantially axial direction.

In another embodiment that is not illustrated the carcass structure 2 comprises at least two carcass plies 3 radially juxtaposed over one another, each comprising a plurality of reinforcing cords 20 arranged substantially parallel to one another. Said at least two carcass plies 3 are crossed over one another so that the reinforcing cords 20 of a first ply are inclined with respect to the reinforcing cords 20 of the second carcass ply and to the equatorial plane X.

In the first carcass ply the reinforcing cords 20 are arranged so as to form an angle with the equatorial plane X comprised in the range between about 10° and about 70°, preferably between about 15° and about 45°.

In the second carcass ply the reinforcing cords 20 are arranged so as to form an angle with the equatorial plane X comprised in the range between about 10° and about 70°, preferably between about 15° and about 45°.

The reinforcing cords 20 of the second carcass ply are arranged in an opposite manner with respect to the reinforcing cords 20 of the first carcass ply. In other words, the aforementioned reinforcing cords 20 have the same amount of inclination with respect to the equatorial plane X, but have opposite orientation.

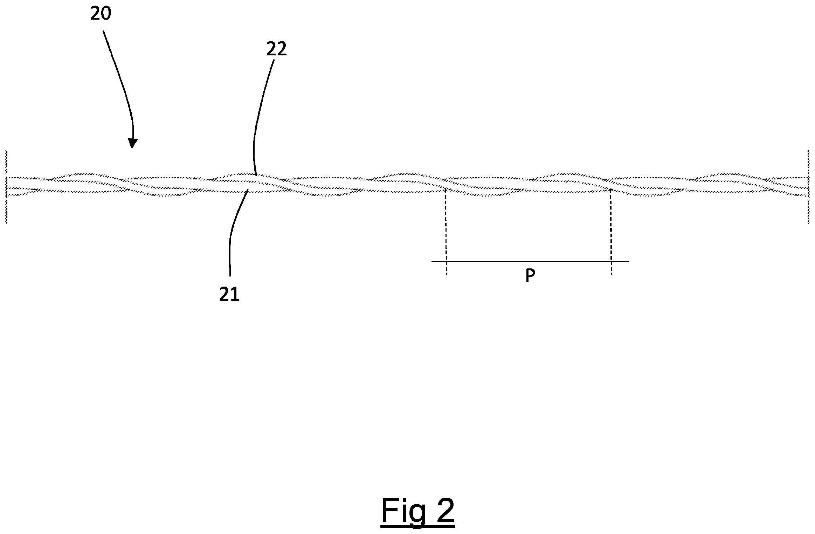

Each reinforcing cord 20 comprises a first end 21 and a second end 22 twisted together, as schematically indicated in figure 2.

The twists (TPM) per meter of the first end 21 on the second end 22, or of the second end 22 on the first end 21, are comprised between about 100 and about 500, more preferably between about 280 and about 380.

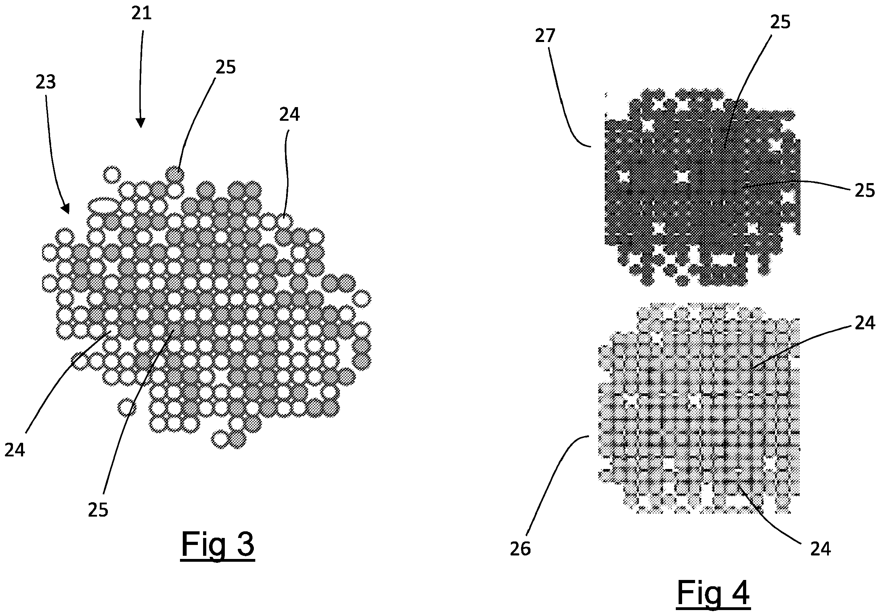

The first end 21 is a hybrid yarn 23 consisting of a plurality of first filaments 24 and of a plurality of second filaments 25 mixed together, as illustrated in figure 3.

The hybrid yarn 23 that makes the first end 21 is obtained from a first yarn 26 and from a second yarn 27, each made up of a plurality of filaments 24, 25 of a respective single material (as schematized in figure 4). The filaments 24, 25 of the first and second yarn 26, 27 are mixed through an operation known as "commingling" and described in document WO 2009/052844 to the same Applicant.

As an example, a process for making the hybrid yarn 23 provides that the first yarn 26 and the second yarn 27 are conveyed and brought towards one another inside a duct of an airjet device inside which pressurized air is introduced through one or more nozzles. The air separates the single filaments 24, 25 of each of the first 26 and second yarn 27 and mixes them forming the single hybrid yarn 23.

In the embodiment according to the present description, which as already stated is relative to a tyre for wheels of high-performance motorcycles, the first filaments 24 are made from material with high modulus, preferably aramidic material, for example aromatic polyamide (Aramid), and the second filaments 25 are made from polyethylene terephthalate (PET).

In other embodiments not described in detail, the first filaments 24 can be made from material with low modulus, and the second filaments 25 can be made from material with high modulus.

It is also possible to provide that the first filaments 24 are made from material with high modulus and that the second filaments 25 are also made from material with high modulus, provided that the material that makes the first filaments 24 has a different modulus from the material that makes the second filaments 25.

Furthermore, it is possible to provide that the first filaments 24 are made from material with low modulus and that the second filaments 25 are also made from material with low modulus, provided that the material that makes the first filaments 24 has a different modulus from the material that makes the second filaments 25.

In the embodiment described in detail, the first filaments 24 of the first yarn 26 are mixed with the second filaments 25 of the second yarn 27 in proportions of 50% by weight.

The count of the first yarn 26 is comprised between about 840 dtex and about 2200 dtex.

The count of the second yarn 27 is comprised between about 840 dtex and about 2200 dtex.

The count of the first 26 and second yarn 27, in the preferred embodiment of the invention, is the same and is equal to about 1100 dtex.

The hybrid yarn 23 is twisted on itself with a number of twists per meter comprised between about 310 and about 410.

Preferably, the number of twists per meter of the hybrid yarn 23 is comprised between 320 and 360.

Even more preferably, the number of twists per meter of the hybrid yarn 23 is equal to 330 or 340.

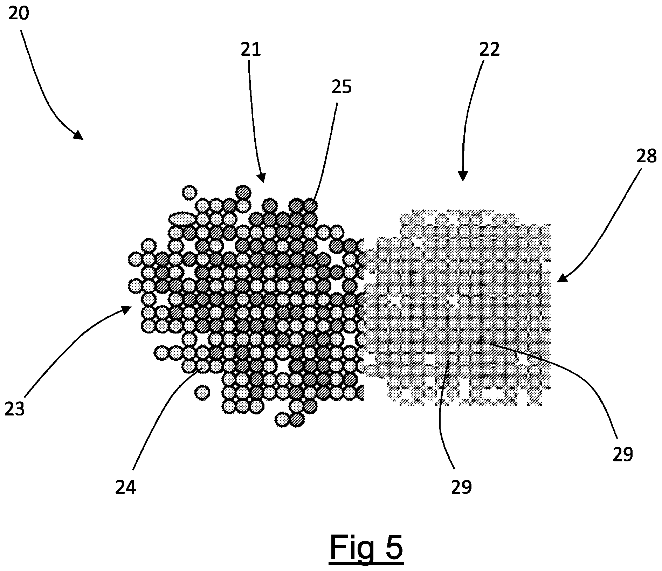

With reference to figure 5, the second end 22 of the reinforcing cord 21 comprises a textile yarn 28 comprising third single filaments 29.

The third filaments 29 are, in the embodiment described here in detail, made from aramidic material, for example aromatic polyamide (Aramid).

In other embodiments, the third filaments 29 can be made from any other material with high modulus or from material with low modulus.

In the embodiment described in detail, the count of the textile yarn 28 of the second end 22 is comprised between about 1100 dtex and about 2200 dtex and preferably it is about 1670 dtex.

The textile yarn 28 is twisted on itself with a number of twists per meter comprised between about 310 and about 410.

Preferably, the number of twists per meter of the textile yarn 28 is comprised between 320 and 360.

Even more preferably, the number of twists per meter of the textile yarn 28 is equal to about 330 or 340.

Preferably, the number of twists per meter of the hybrid yarn 23 and of the textile yarn 28 is the same.

Preferably, the hybrid yarn 23 is twisted on itself with a different number of twists per meter from the number of twists per meter with which the first end 21 is twisted together with the second end 22.

Preferably, the textile yarn 28 is twisted on itself with a different number of twists per meter from the number of twists per meter with which the first end 21 is twisted with the second end 22.

The number of reinforcing cords 20 of the carcass ply 3 arranged per decimeter (also called thread count), measured along a circumferential direction, is comprised between about 80 and about 120, preferably between about 97 and about 110.

The reinforcing cord 20 preferably has the following mechanical characteristics.

Elongation less than or equal to 1% when subjected to a load less than or equal to 20 N.

Elongation less than or equal to 3% when subjected to a load of about 100 N.

Tensile strength greater than about 300 N.

The Applicant has carried out some comparative tests to evaluate the performance of tyres comprising, in the respective carcass structures, reinforcing cords in accordance with the present invention in comparison with a reference tyre comprising, in its carcass structure, reinforcing cords made from only Aramid.

In particular, the test tyre described below and the reference tyre are distinguished from one another substantially only for the different reinforcing cords used in the carcass structure. All of the tyres comprise a zero degrees belt structure with identical metallic reinforcing cords. The reference tyre, in the carcass structure, comprises used reinforcing cords of type AR 1100x2(45x45) F80, in other words reinforcing cords made up of two yarns made from Aramid with count 1100 dtex each twisted on itself with 450 twists per meter, twisted together and in which the thread count of the reinforcing cords is equal to 80.

The test tyre comprises reinforcing cords 20 in the carcass structure of type:
(AR+PET)/AR 2200/1670(33/33x33) F110.

They are reinforcing cords 20 in accordance with the present invention in which the hybrid yarn 23 is obtained from a first yarn 26 comprising first filaments 24 made from Aramid and from a second yarn 27 comprising second filaments 25 in PET in which the first filaments 24 are mixed with the second filaments 25 in a proportion of 50% by weight.

The second end 22 is made from a textile yarn 28 comprising only filaments 29 made from Aramid.

The count of the first 26 and of the second yarn 27 is the same and is equal to 1100 dtex.

The count of the textile yarn 28 is equal to 1670 dtex.

The number of twists on itself of the hybrid yarn 23 is equal to 330 per meter. The number of twists on itself of the textile yarn 28 is equal to 330 per meter.

The thread count of the reinforcing cord 20 is equal to 110.

### TEST 1

A track test carried out by a driver showed, with respect to the reference tyre, better grip on the asphalt of the test tyre, a better lap time around the track, better driving precision, better thrust provided by the rear wheel and better stability of alignment of the motorcycle.

### TEST 2

The reinforcing cords of the carcass structure of the reference tyre and those of the test tyre were subjected to a same stress test. At the end of the stress test the tensile strength of the reinforcing cord was evaluated, so as to evaluate the mechanical fatigue behavior thereof.

The stress test was carried out as described hereinafter.

The tyre (both the test one and the reference one) has dimensions 200/65R17 and was mounted on a hub with camber 45 degrees, inflated to a pressure of 1.6 bar and made to rotate on a road wheel of 1.8 meters in diameter at a speed of 120 km/h with a load of 250 kg, at controlled room temperature (25 +/- 2 °C) for one hour.

The test concluded positively since from a visual inspection the tyre (both the test one and the reference one) did not show clear failures at the end of the test.

After the stress test, the tyre (both the test one and the reference one) was sent to the laboratory to analyze the mechanical characteristics of the reinforcing cords. In particular, reinforcing cords of the carcass were manually extracted. The extracted reinforcing cords were subjected to traction testing with a dynamometer (Instron) to measure the rupture load thereof in the section corresponding to the engaged side of the cover during testing.

From 10 tyres identical to the one used in the stress test but not subjected to stress test reinforcing cords were extracted, which were also subjected to traction testing. From the comparison between the measured rupture loads, the degradation of the tensile strength of the reinforcing cords in percentage terms was obtained.

After having subjected the test tyre and the reference tyre to stress testing, the tensile strength of the reinforcing cords of the test tyre was between about 150 N and about 190 N, whereas the tensile strength of the reinforcing cords of the reference tyre was between about 70 N and about 130 N. The tensile strength of the reinforcing cords was again about 300 N for the reinforcing cords of the reference tyre and about 345 N for the reinforcing cords of the test tyre.

In percentage degradation terms of the tensile strength, the reinforcing cord of the test tyre has a degradation comprised between about 45% and about 57%, whereas the reinforcing cord of the reference tyre has a degradation comprised between about 57% and about 77%.

It was thus found that the reinforcing cords of the test tyre, made in accordance with the present invention, are capable of withstanding a greater number of stress cycles with respect to the reinforcing cords of the reference tyre.

Of course, those skilled in the art can bring further modifications and variants to the tyre 1 described above in order to satisfy specific and contingent application requirements, said variants and modifications in any case being encompassed by the scope of protection as defined by the following claims.

## Claims

1. Reinforcing cord (20) for a tyre (1) for vehicle wheels comprising a first end (21) and a second end (22) twisted together, **characterised in that** the first end (21) is a hybrid yarn (23) comprising a plurality of first filaments (24) mixed with a plurality of second filaments (25) so that single filaments of the plurality of first filaments (24) and single filaments of the plurality of second filaments (25) are arranged with respect to one another according to a substantially random scheme, wherein the filaments of the plurality of first filaments (24) are made from a single material having a first modulus and wherein the filaments of the plurality of second filaments (25) are made from a single material having a second modulus different from the first modulus, wherein the second end (22) is a multi-filament textile yarn (28) comprising a plurality of third filaments (29) made from at least one material having a third modulus.

2. Reinforcing cord (20) according to claim 1, wherein said first modulus and said third modulus are greater than said second modulus.

3. Tyre (1) for vehicle wheels, comprising:
a carcass structure (2);
a belt structure (10) applied in radially outer position with respect to the carcass structure (2);
a tread band (11) applied in radially outer position with respect to the belt structure (10);
wherein the carcass structure (2) comprises at least one carcass ply (3);
wherein the carcass ply (3) comprises a plurality of reinforcing cords (20) according to claim 1.

4. Tyre (1) for vehicle wheels according to claim 3, wherein said third modulus is greater than or equal to said first modulus.

5. Tyre (1) for vehicle wheels according to claim 3 or 4, wherein said second modulus is less than said first modulus.

6. Tyre (1) for vehicle wheels according to any one of the claims from 3 to 5, wherein the filaments of the plurality of first filaments (24) are made from a single material having a high modulus.

7. Tyre (1) for vehicle wheels according to any one of the claims from 3 to 6, wherein the filaments of the plurality of second filaments (25) are made from a single material having a low modulus.

8. Tyre (1) for vehicle wheels according to any one of the claims from 3 to 7, wherein the filaments of the plurality of first filaments (24) are made from a single material having a high modulus, the filaments of the plurality of second filaments (25) are made from a single material having a low modulus and the filaments of the plurality of third filaments (29) are made from at least one material having a high modulus.

9. Tyre (1) for vehicle wheels according to any one of the claims from 3 to 8, wherein the filaments of the plurality of first filaments (24) are made from aramidic material.

10. Tyre (1) for vehicle wheels according to any one of the claims from 3 to 9, wherein the filaments of the plurality of second filaments (25) are made from a material selected from the group comprising: polyethylene terephthalate (PET), polyethylene napthalate (PEN), Nylon, Rayon.

11. Tyre (1) for vehicle wheels according to any one of the claims from 3 to 10, wherein the filaments of the plurality of third filaments (29) are made from aramidic material.

12. Tyre (1) for vehicle wheels according to claim 10, wherein the filaments of the plurality of second filaments (25) are made from polyethylene terephthalate (PET).

13. Tyre (1) for vehicle wheels according to any one of the claims from 3 to 12, wherein the filaments of the plurality of first filaments (24) are mixed with the filaments of the plurality of second filaments (25) in a proportion of 50% by weight.

14. Tyre (1) for vehicle wheels according to any one of the claims from 3 to 13, wherein the hybrid yarn (23) is obtained from a first yarn (26) comprising said plurality of first filaments (24) and from a second yarn (27) comprising said plurality of second filaments (25); the multi-filament textile yarn (28) of the second end (22) having a count equal to or greater than that of the first yarn (26).

15. Tyre (1) for vehicle wheels according to claim 14, wherein the count of the first yarn (26) is comprised between about 840 dtex and about 2200 dtex.

16. Tyre (1) for vehicle wheels according to claim 14 or 15, wherein the count of the second yarn (27) is comprised between about 840 dtex and about 2200 dtex.

17. Tyre (1) for vehicle wheels according to any one of the claims from 3 to 15, wherein the first end (21) and the second end (22) are twisted on themselves with a predetermined number of twists per meter.

18. Tyre (1) for vehicle wheels according to any one of the claims from 3 to 16, wherein the first end (21) and the second end (22) are twisted on themselves with an equal number of twists per meter.

## Patentansprüche

1. Verstärkungscord (20) für einen Reifen (1) für Fahrzeugräder, umfassend ein erstes Ende (21) und ein zweites Endes (22), die miteinander verdrillt sind, **dadurch gekennzeichnet, dass** das erste Ende (21) ein Hybridgarn (23) ist, das eine Mehrzahl von ersten Filamenten (24) umfasst, die mit einer Mehrzahl von zweiten Filamenten (25) gemischt ist, so dass einzelne Filamente der Mehrzahl von ersten Filamenten (24) und einzelne Filamente der Mehrzahl von zweiten Filamenten (25) gemäß einem im Wesentlichen zufälligen Schema in Bezug aufeinander angeordnet sind, wobei die Filamente der Mehrzahl von ersten Filamenten (24) aus einem einzigen Material mit einem ersten Modul hergestellt sind, und wobei die Filamente der Mehrzahl von zweiten Filamenten (25) aus einem einzigen Material mit einem vom ersten Modul verschiedenen zweiten Modul hergestellt sind, wobei das zweite Ende (22) ein Multifilament-Textilgarn (28) ist, das eine Mehrzahl von dritten Filamenten (29) umfasst, die aus mindestens einem Material mit einem dritten Modul hergestellt ist.

2. Verstärkungscord (20) nach Anspruch 1, wobei der erste Modul und der zweite Modul größer als der zweite Modul sind.

3. Reifen (1) für Fahrzeugräder, umfassend:
eine Karkassenstruktur (2);
eine Gürtelstruktur (10), die in radial äußerer Position in Bezug auf die Karkassenstruktur (2) aufgebracht ist;
ein Laufflächenband (11), das in radial äußerer Position in Bezug auf die Gürtelstruktur (10) aufgebracht ist;
wobei die Karkassenstruktur (2) mindestens eine Karkassenlage (3) umfasst;
wobei die Karkassenlage (3) eine Mehrzahl von Verstärkungscords (20) nach Anspruch 1 umfasst.

4. Reifen (1) für Fahrzeugräder nach Anspruch 3, wobei der dritte Modul größer als oder gleich wie der erste Modul ist.

5. Reifen (1) für Fahrzeugräder nach Anspruch 3 oder 4, wobei der zweite Modul kleiner als der erste Modul ist.

6. Reifen (1) für Fahrzeugräder nach einem der Ansprüche 3 bis 5, wobei die Filamente der Mehrzahl von ersten Filamenten (24) aus einem einzigen Material mit einem hohen Modul hergestellt sind.

7. Reifen (1) für Fahrzeugräder nach einem der Ansprüche 3 bis 6, wobei die Filamente der Mehrzahl von zweiten Filamenten (25) aus einem einzigen Material mit einem niedrigen Modul hergestellt sind.

8. Reifen (1) für Fahrzeugräder nach einem der Ansprüche 3 bis 7, wobei die Filamente der Mehrzahl von ersten Filamenten (24) aus einem einzigen Material mit einem hohen Modul hergestellt sind, die Filamente der Mehrzahl von zweiten Filamenten (25) aus einem einzigen Material mit einem niedrigen Modul hergestellt sind und die Filamente der Mehrzahl von dritten Filamenten (29) aus mindestens einem Material mit einem hohen Modul hergestellt sind.

9. Reifen (1) für Fahrzeugräder nach einem der Ansprüche 3 bis 8, wobei die Filamente der Mehrzahl von ersten Filamenten (24) aus Aramidmaterial hergestellt sind.

10. Reifen (1) für Fahrzeugräder nach einem der Ansprüche 3 bis 9, wobei die Filamente der Mehrzahl von zweiten Filamenten (25) aus einem Material hergestellt sind, das ausgewählt ist aus der Gruppe bestehend aus: Polyethylenterephthalat (PET), Polyethylennapthalat (PEN), Nylon, Rayon.

11. Reifen (1) für Fahrzeugräder nach einem der Ansprüche 3 bis 10, wobei die Filamente der Mehrzahl von dritten Filamenten (29) aus Aramidmaterial hergestellt sind.

12. Reifen (1) für Fahrzeugräder nach Anspruch 10, wobei die Filamente der Mehrzahl von zweiten Filamenten (25) aus Polyethylenterephthalat (PET) hergestellt sind.

13. Reifen (1) für Fahrzeugräder nach einem der Ansprüche 3 bis 12, wobei die Filamente der Mehrzahl von ersten Filamenten (24) mit den Filamenten der Mehrzahl von zweiten Filamenten (25) in einem Anteil von 50 Gewichts% gemischt sind.

14. Reifen (1) für Fahrzeugräder nach einem der Ansprüche 3 bis 13, wobei das Hybridgarn (23) erhalten wird aus einem ersten Garn (26), das die Mehrzahl von ersten Filamenten (24) umfasst, und aus einem zweiten Garn (27), das die Mehrzahl von zweiten Filamenten (25) umfasst; wobei das Multifilament-Textilgarn (28) des zweiten Endes (22) einen Titer aufweist, der gleich wie oder größer als der des ersten Garns (26) ist.

15. Reifen (1) für Fahrzeugräder nach Anspruch 14, wobei der Titer des ersten Garns (26) zwischen etwa 840 dtex und etwa 2200 dtex liegt.

16. Reifen (1) für Fahrzeugräder nach Anspruch 14 oder 15, wobei der Titer des zweiten Garns (27) zwischen etwa 840 dtex und etwa 2200 dtex liegt.

17. Reifen (1) für Fahrzeugräder nach einem der Ansprüche 3 bis 15, wobei das erste Ende (21) und das zweite Ende (22) mit einer vorgegebenen Anzahl von Verdrillungen pro Meter um sich selbst verdrillt sind.

18. Reifen (1) für Fahrzeugräder nach einem der Ansprüche 3 bis 16, wobei das erste Ende (21) und das zweite Ende (22) mit einer gleichen Anzahl von Verdrillungen pro Meter um sich selbst verdrillt sind.

## Revendications

1. Câblé de renforcement (20) pour un pneu (1) pour roues de véhicule comprenant une première extrémité (21) et une deuxième extrémité (22) torsadées ensemble, **caractérisé en ce que** la première extrémité (21) est un fil hybride (23) comprenant une pluralité de premiers filaments (24) mélangés à une pluralité de deuxièmes filaments (25) de sorte que des filaments simples de la pluralité de premiers filaments (24) et des filaments simples de la pluralité de deuxièmes filaments (25) soient agencés les uns par rapport aux autres selon un schéma sensiblement aléatoire, dans lequel les filaments de la pluralité de premiers filaments (24) sont réalisés en un seul matériau ayant un premier module et dans lequel les filaments de la pluralité de deuxièmes filaments (25) sont réalisés en un seul matériau ayant un deuxième module différent du premier module, dans lequel la deuxième extrémité (22) est un fil textile multifilament (28) comprenant une pluralité de troisièmes filaments (29) réalisés en au moins un matériau ayant un troisième module.

2. Câblé de renforcement (20) selon la revendication 1, dans lequel ledit premier module et ledit troisième module sont supérieurs audit deuxième module.

3. Pneu (1) pour roues de véhicule, comprenant :
une structure de carcasse (2) ;
une structure de ceinture (10) appliquée dans une position radialement extérieure par rapport à la structure de carcasse (2) ;
une bande de roulement (11) appliquée dans une position radialement extérieure par rapport à la structure de ceinture (10) ;
dans lequel la structure de carcasse (2) comprend au moins un pli de carcasse (3) ;
dans lequel le pli de carcasse (3) comprend une pluralité de câblés de renforcement (20) selon la revendication 1.

4. Pneu (1) pour roues de véhicule selon la revendication 3, dans lequel ledit troisième module est supérieur ou égal audit premier module.

5. Pneu (1) pour roues de véhicule selon la revendication 3 ou 4, dans lequel ledit deuxième module est inférieur audit premier module.

6. Pneu (1) pour roues de véhicule selon l'une quelconque des revendications 3 à 5, dans lequel les filaments de la pluralité de premiers filaments (24) sont réalisés en un seul matériau à haut module.

7. Pneu (1) pour roues de véhicule selon l'une quelconque des revendications 3 à 6, dans lequel les filaments de la pluralité de deuxièmes filaments (25) sont réalisés en un seul matériau à faible module.

8. Pneu (1) pour roues de véhicule selon l'une quelconque des revendications 3 à 7, dans lequel les filaments de la pluralité de premiers filaments (24) sont réalisés en un seul matériau à haut module, les filaments de la pluralité de deuxièmes filaments (25) sont réalisés en un seul matériau à faible module et les filaments de la pluralité de troisièmes filaments (29) sont réalisés en au moins un matériau à haut module.

9. Pneu (1) pour roues de véhicule selon l'une quelconque des revendications 3 à 8, dans lequel les filaments de la pluralité de premiers filaments (24) sont réalisés en matériau aramide.

10. Pneu (1) pour roues de véhicule selon l'une quelconque des revendications 3 à 9, dans lequel les filaments de la pluralité de deuxièmes filaments (25) sont réalisés en un matériau choisi dans le groupe comprenant : le polyéthylène téréphtalate (PET), le naphtalate de polyéthylène (PEN), le nylon, la rayonne.

11. Pneu (1) pour roues de véhicule selon l'une quelconque des revendications 3 à 10, dans lequel les filaments de la pluralité de troisièmes filaments (29) sont réalisés en matériau aramide.

12. Pneu (1) pour roues de véhicule selon la revendication 10, dans lequel les filaments de la pluralité de deuxièmes filaments (25) sont réalisés en polyéthylène téréphtalate (PET).

13. Pneu (1) pour roues de véhicule selon l'une quelconque des revendications 3 à 12, dans lequel les filaments de la pluralité de premiers filaments (24) sont mélangés aux filaments de la pluralité de deuxièmes filaments (25) dans une proportion de 50% en poids.

14. Pneu (1) pour roues de véhicule selon l'une quelconque des revendications 3 à 13, dans lequel le fil hybride (23) est obtenu à partir d'un premier fil (26) comprenant ladite pluralité de premiers filaments (24) et d'un deuxième fil (27) comprenant ladite pluralité de deuxièmes filaments (25) ; le fil textile multifilament (28) de la deuxième extrémité (22) ayant un titre supérieur ou égal à celui du premier fil (26).

15. Pneu (1) pour roues de véhicule selon la revendication 14, dans lequel le titre du premier fil (26) est compris entre environ 840 dtex et environ 2200 dtex.

16. Pneu (1) pour roues de véhicule selon la revendication 14 ou 15, dans lequel le titre du deuxième fil (27) est compris entre environ 840 dtex et environ 2200 dtex.

17. Pneu (1) pour roues de véhicule selon l'une quelconque des revendications 3 à 15, dans lequel la première extrémité (21) et la deuxième extrémité (22) sont torsadées sur elles-mêmes avec un nombre prédéterminé de torsions par mètre.

18. Pneu (1) pour roues de véhicule selon l'une quelconque des revendications 3 à 16, dans lequel la première extrémité (21) et la deuxième extrémité (22) sont torsadées sur elles-mêmes avec un nombre égal de torsions par mètre.
